# EUROPEAN PATENT SPECIFICATION

(11) **EP 1 604 858 B1**
(45) Date of publication and mention of the grant of the patent: **16.05.2007**
(21) Application number: 05105119.1
(22) Date of filing: 10.06.2005
(51) Int. Cl.: B60K 15/03, B29C 41/20

(54) **Fuel tank and the relative method of production**
Kraftstofftank und sein Herstellungsverfahren
Réservoir de carburant et méthode de sa production

(30) Priority: 11.06.2004 IT MI20041172
(43) Date of publication of application: 14.12.2005
(73) Proprietor: IVECO S.p.A., 10156 Torino (IT)
(72) Inventor: Nicosia, Biagio, 10141 Torino (IT)
(74) Representative: Borsano, Corrado

(56) References cited:
- US-A- 4 357 293
- US-A- 4 504 535
- US-A1- 2003 047 835

## Description

### FIELD OF THE INVENTION

This invention relates to a fuel tank, in particular to a liquid fuel tank for a vehicle, especially for an industrial vehicle.

### STATE OF THE ART

The use of tanks made of plastic, for example as vehicle fuel tanks, is common practice. Crosslinked polyethylene (PE) is commonly used for this purpose, since it has the necessary mechanical resistance properties, as well as the appropriate chemical resistance to fuels such as diesel oil, for the specific use. Such tanks are generally manufactured using the rotational moulding (or rotomoulding) process. This consists of melting the plastic material in the mould together with the appropriate additives that cause crosslinking as the material solidifies. Once crosslinked, the plastic cannot be melted again, which means it cannot even be welded.

Dokument US 4,357,293, which is considered to be the closest prior art, discloses a tank of said kind.

Fuel tanks must usually incorporate a series of structures, such as openings through which the fuel is introduced, openings through which the fuel can be drained and openings for fuel level gauges. Such openings, in particular the opening used to insert and connect the fuel gauges, may be required to incorporate appropriate fixing devices, such as metal parts that may, for example, be threaded or may consist of bayonet couplings for structures comprising different devices. Such metal parts are usually introduced into the mould and secured in place in an appropriate manner before moulding is performed, so that they become part of the finished tank, directly incorporated into the structure of the tank.

With respect to the opening to receive the fuel gauges, a solution that is often used consists of a metal flange with two rims at the ends to prevent it from coming out of the opening. Said flange is placed in an appropriate position in the mould (coaxially with the opening to be formed in the tank) before the tank is moulded, so that, once the process is complete, it cannot be removed.

This solution is not entirely satisfactory as far as the tightness of the coupling between the metal flange and the tank is concerned; this joint along the wall of the tank up to the outer side surface of the metal flange is a joint between different materials that have different linear thermal expansion coefficients, and the use of any type of gasket is clearly not possible. The joint is also difficult to obtain during the moulding process, given the geometry of the flange.

### SUMMARY OF THE INVENTION

These problems have now been solved with a fuel tank, preferably a liquid fuel tank, comprising a wall made of crosslinked plastic and a port device with a body made of thermoplastic material welded to said wall in correspondence with an opening. Said port device is preferably ring-shaped and preferably comprises a metal structure. According to one aspect of this invention said port device is moulded before moulding the tank, preferably by injection moulding.

The invention also relates to a method for producing a tank comprising the steps of:
producing a port device made of thermoplastic material, comprising a metal insert;
positioning said port device in an appropriate mould for the rotomoulding process;
melting a thermoplastic material together with a crosslinking agent in the mould and moulding the tank.

It is a particular object of the invention what set forth in the appended claims.

### LIST OF THE DRAWINGS

This invention will now be illustrated through a detailed description of the preferred but not exclusive embodiments, furnished merely by way of example, with the aid of the drawings attached, of which:
figure 1 is a schematic diagram illustrating a cross-sectional view of a fuel tank port device according to this invention;
figure 2 is a schematic diagram illustrating a cross-sectional view of a tank according to this invention;
figure 3 is a schematic diagram illustrating a detail of the view in figure 2 comprising the port device moulded to the tank.

### DETAILED DESCRIPTION OF A PREFERRED EMBODIMENT

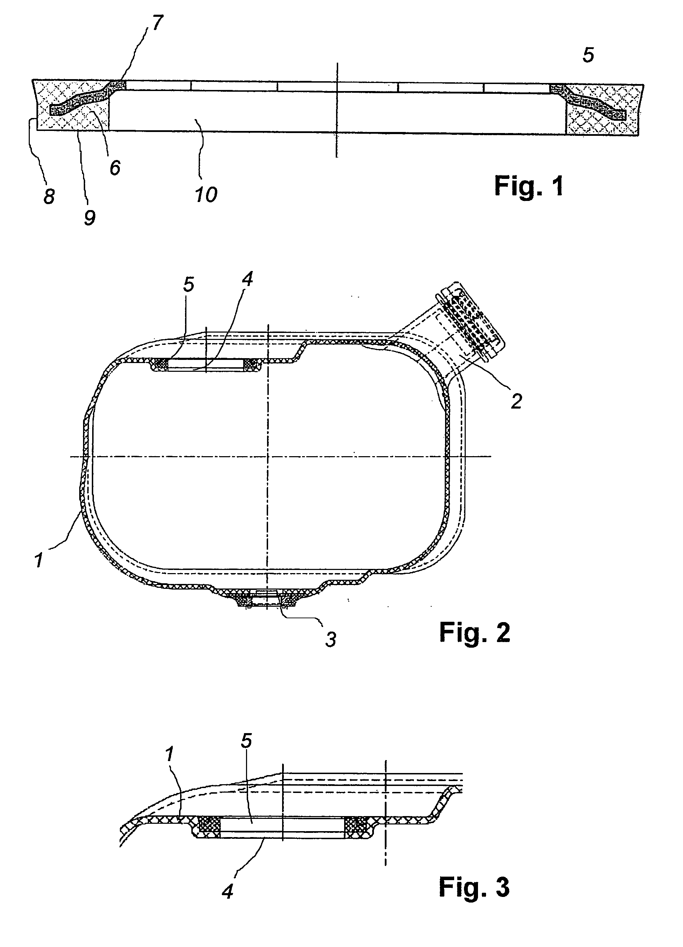

The tank according to this invention is now described with reference to figures 2 and 3. There is a wall 1, made of crosslinked plastic, an opening 2, in the upper part through which the fuel is introduced, integrally obtained with the wall, a drainage hole 3 on the bottom of the tank to drain the fuel, which includes the devices for fastening a removable cap or other drainage devices.

There is an opening 4 in the upper part of the tank, to which the port device 5 is attached. The wall 1 of the tank is preferably moulded using the rotomoulding process and is made of a crosslinked thermoplastic material, preferably crosslinked polyethylene (PE). As in conventional methods of production, the wall is obtained by placing powder of the thermoplastic material (PE) in the mould together with an additive (e.g. a peroxide) that causes crosslinking. Once the required shape and thickness have been obtained, by controlling the plastic melting process, the moulded part is cooled in an appropriate manner (jet of air or jets of water); crosslinking occurs during solidification.

The port device 5 is preferably ring-shaped and comprises a part 6 made of high-density thermoplastic polyethylene that is not crosslinked. It also preferably comprises a structure 7 made of an appropriate material, preferably metal. Said structure can be used to attach other devices, incorporating the corresponding coupling devices, that may, for example, be a bayonet coupling. The port device 5 is preferably produced using the moulding process, for example by injection moulding. According to a preferred embodiment of the invention, it is placed and secured in position in the mould that is used to produce the tank. When the tank is moulded using a thermoplastic material and a crosslinking agent, it will thus be integral with the port device, also thanks to the surface melting of the thermoplastic body of the latter, due to the process temperature.

The thermoplastic materials that make up the body of the port device, and that used with a crosslinking agent to mould the wall of the tank must be compatible in terms of their chemical properties and must also have the same melting point. Process temperatures obviously depend on the characteristics of the materials that are used, which must have the appropriate mechanical and chemical resistance properties in consideration of the specific use of the finished product.

Once the wall of the tank has been moulded, any excess material blocking the port device can be removed, in an appropriate manner, to form the opening 4; it is apparent that during the rotational moulding process part of the melted material may end up blocking the opening of the port device, which may be located, for example, around a projecting part or core in the mould. In the case illustrated in the figures, during the tank moulding process the material used to make the wall covers the side wall 8 and a front wall 9 of the port device and remains moulded to these in the finished product, as illustrated in the figures. The part that may have formed in correspondence with the hole 10 of the port device has already been removed in figures 2 and 3, to form the opening 4.

The advantage of the tank according to this invention is that the port device is perfectly integral with the body of the tank, eliminating the possibility of an imperfect seal between the port device and the wall of the tank and between the port device and the metal flange. This is important, in view of the fact that often, in the case of vehicle fuel tanks like the one illustrated in the drawings, the port device is below the level of the fuel in the tank, when this is full. The use of a pre-moulded port device as described above results in that the metal insert can be of a suitable shape in order to ensure a better seal along the joint with the body of the flange than can be obtained between a conventional metal flange and the wall of the tank. Moreover, the coupling between the metal and plastic is restricted to an area inside the port device, as shown in figure 1, which means that even in the event of filtration through the joint between the metal and plastic parts, there would be no adverse consequences.

This example describes a port device for inserting the fuel gauges, but the technique described herein can also be applied to other port devices, such as openings for draining or inserting fuel and other openings.

## Claims

1. Fuel tank, comprising a wall (1) made of crosslinked plastic **characterized by** the fact that it comprises a port device (5) with a body (6) made of thermoplastic material, integrally moulded with said wall in correspondence with an opening (4).

2. Tank according to claim 1 **characterized by** the fact that said port device comprises a metal structure (7) for attaching other devices.

3. Tank according to claim 1 or 2 **characterized by** the fact that said port device is obtained by means of an injection moulding process.

4. Tank according to any of the previous claims **characterized by** the fact that said wall is obtained by means of a rotational moulding process.

5. Tank according to any of the previous claims **characterized by** the fact that said wall is made of crosslinked PE and said port device has a body (6) made of PE.

6. Tank according to any of the previous claims **characterized by** the fact that said port device is ring-shaped.

7. Method of production of a fuel tank **characterized by** the fact that it comprises the steps of:
producing a port device with a body made of thermoplastic material;
placing said port device in an appropriate type of mould for the rotational moulding process;
melting a thermoplastic material with a crosslinking agent in the mould and moulding the tank.

8. Method according to claim 7 **characterized by** the fact that said port device is produced by means of an injection moulding process.

## Patentansprüche

1. Kraftstofftank, welcher eine aus einem vernetzten Kunststoff bestehende Wandung (1) umfasst, **dadurch gekennzeichnet, dass** er eine Anschlussvorrichtung (5) mit einem aus einem thermoplastischen Material gefertigten Körper (6) umfasst, welcher in Verbindung mit einer Öffnung (4) zusammen mit der genannten Wandung als Ganzes gegossen ist.

2. Tank gemäß Anspruch 1, **dadurch gekennzeichnet, dass** die genannte Anschlussvorrichtung eine Metallstruktur (7) zur Befestigung weiterer Vorrichtungen umfasst.

3. Tank gemäß Anspruch 1 oder 2, **dadurch gekennzeichnet, dass** die genannte Anschlussvorrichtung nach einem Spritzgussverfahren erhalten wird.

4. Tank gemäß irgendeinem der vorhergehenden Ansprüche, **dadurch gekennzeichnet, dass** die genannte Wandung nach einem Rotationsgussverfahrens erhalten wird.

5. Tank gemäß einem beliebigen der vorhergehenden Ansprüche, **dadurch gekennzeichnet, dass** die genannte Wandung aus vernetztem PE gefertigt ist und dass die genannte Anschlussvorrichtung einen aus PE gefertigten Körper (6) aufweist.

6. Tank gemäß einem beliebigen der vorhergehenden Ansprüche, **dadurch gekennzeichnet, dass** die genannte Anschlussvorrichtung ringförmig ist.

7. Verfahren zur Herstellung eines Kraftstofftanks, **dadurch gekennzeichnet, dass** es die folgenden Arbeitsschritte umfasst:
Herstellen einer Anschlussvorrichtung mit einem aus thermoplastischem Material gefertigten Körper;
Einbringen der genannten Anschlussvorrichtung in einen geeigneten Typ von Gussform für das Rotationsgussverfahren;
Schmelzen eines thermoplastischen Materials zusammen mit einem die Vernetzung bewirkenden Mittel in der Gussform und Gießen des Tanks.

8. Verfahren gemäß Anspruch 7, **dadurch gekennzeichnet, dass** die genannte Anschlussvorrichtung nach einem Spritzgussverfahrens hergestellt wird.

## Revendications

1. Réservoir de carburant, comprenant une paroi (1) réalisée en plastique réticulé, **caractérisé par le fait qu'**il comprend un dispositif formant orifice (5) dans un corps (6) réalisé en matériau thermoplastique, moulé intégralement avec ladite paroi en correspondance avec une ouverture (4).

2. Réservoir selon la revendication 1, **caractérisé par le fait que** ledit dispositif formant orifice comprend une structure métallique (7) pour la fixation d'autres dispositifs.

3. Réservoir selon la revendication 1 ou 2, **caractérisé par le fait que** ledit dispositif formant orifice est obtenu par un procédé de moulage par injection.

4. Réservoir selon l'une des revendications précédentes, **caractérisé par le fait que** ladite paroi est obtenue au moyen d'un procédé de moulage rotationnel.

5. Réservoir selon l'une des revendications précédentes, **caractérisé par le fait que** ladite paroi est réalisée en PE réticulé et que ledit dispositif formant orifice possède un corps (6) réalisé en PE.

6. Réservoir selon l'une des revendications précédentes, **caractérisé par le fait que** ledit dispositif formant orifice a une forme annulaire.

7. Procédé de fabrication d'un réservoir de carburant, **caractérisé par le fait qu'**il comprend les étapes consistant à:
produire un dispositif formant orifice avec un corps réalisé en matériau thermoplastique;
placer ledit dispositif formant orifice dans un type de moule approprié pour le processus de moulage rotationnel;
faire fondre un matériau thermoplastique avec un agent de réticulation dans le moule et mouler le réservoir.

8. Procédé selon la revendication 7, **caractérisé par le fait que** ledit dispositif formant orifice est produit au moyen d'un procédé de moulage par injection.
